# NEW EUROPEAN PATENT SPECIFICATION

(11) **EP 0 302 580 B2**
(45) Date of publication and mention of the opposition decision: **10.07.1996**
(45) Mention of the grant of the patent: 13.05.1992
(21) Application number: 88302583.5
(22) Date of filing: 24.03.1988
(51) Int. Cl.: H05B 1/02, F24C 7/08

(54) **Heating apparatus**
Heizapparat
Appareil de chauffage

(30) Priority: 01.08.1987 JP 118495/87
(43) Date of publication of application: 08.02.1989
(73) Proprietor: SHARP KABUSHIKI KAISHA, Osaka 545 (JP)
(72) Inventor: Tanaka, Seiji, Yamatorktiyama-shi Nara-ken (JP); Nakagawa, Hideshi, Yodogawa-lu Osaka (JP)
(74) Representative: Hitchcock, Esmond Antony

(56) References cited:
- DE-C- 3 414 946
- FR-A- 2 440 027
- GB-A- 2 099 642
- US-A- 3 553 429
- US-A- 3 821 516
- US-A- 4 091 266
- US-A- 4 236 064

## Description

The present invention relates to heating apparatus for liquids for use for example, in a vacuum coffee maker. Particularly it relates to such apparatus which operates in two phases; one in which the liquid is heated, and another in which the liquid is maintained at a given temperature.

U.S. Patent No. 3,553,429 discloses a circuit for controlling the temperature of a liquid medium in which a heater is controlled by a triac. This circuit provides a visual indication of the actual temperature of the liquid medium and generates a signal indicative of the difference between the temperature of the medium and a reference temperature, and this signal is used to direct the operation of the heater. Means are provided for adjusting the reference temperature.

In heating apparatus of the above kind, provision can be made for switching between high temperature heating corresponding to a boiling mode and low temperature heating corresponding to a warming mode. In one manner of operation thereof, two thermostats are used which have different actuating temperatures. In another, a thermister is employed for detecting the temperature of a subject ot be heated and a temperature control circuit changes the setting temperature of the thermister for each mode. The former can achieve its objective more easily, but has the drawbacks that the apparatus has many mechanically moving parts, temperature hunting is larger and fine temperature control extremely difficult. The latter involves the problem that the construction of the temperature control circuit is complicated, and a number of electronic components are required. This increases manufacturing costs and maintenance is more difficult.

The present invention is directed at a heating apparatus of the kind referred to above which has a simple structure, is inexpensive to manufacture, and provides stable operation and a good serviceability.

The present invention relates to heating apparatus of the type having a heating element for heating a subject to be heated, means for detecting the temperature of the subject and for generating an output signal corresponding to the detected temperature and means for controlling the operation of the heating element, wherein the controlling means comprises set point generating means for selecting between a plurality of preset reference set points and for outputting a reference set point signal corresponding thereto, comparison means having a first input (-) connected to receive the detected temperature signal, a second input (+) connected to receive the selected reference set point signal and an output connected to energising control means for controlling the supply of power to the heater element in accordance with the result of the comparison between the input signals. According to the invention the comparison means output is connected also to an input (S) of the reference set point generating means and the latter includes retaining means adapted to retain a first state and select a first reference set point of the reference sat point generating means on commencement of heating, said retaining means being responsive to the output from the comparison means such that when the first set point temperature is reached, the retaining means takes and retains a second state and selects a second reference set point of the reference set point generating means. The temperature detecting or monitoring means is preferably a thermister having a "negative characteristic. The retaining means is preferably an R S flip-flop circuit, in particular, those of one-chip flip-flop IC.

A warning means may be included for warning the changeover of reference set point by the signal outputted from the retaining means by way of for example, light or sound. Preferably, a light emitting diode is used as a luminous element and an electronic buzzer as a sound element.

An embodiment of the invention will now be described by way of example and with reference to the accompanying drawings wherein:
Figure 1 is a longitudinal sectional view showing the construction of a vacuum coffee maker embodying the heating apparatus of the present invention;
Figure 2 is an electric circuit diagram suitable for use in heating apparatus of the present invention; and
Figure 3 is an electric circuit diagram of a suitable control circuit.

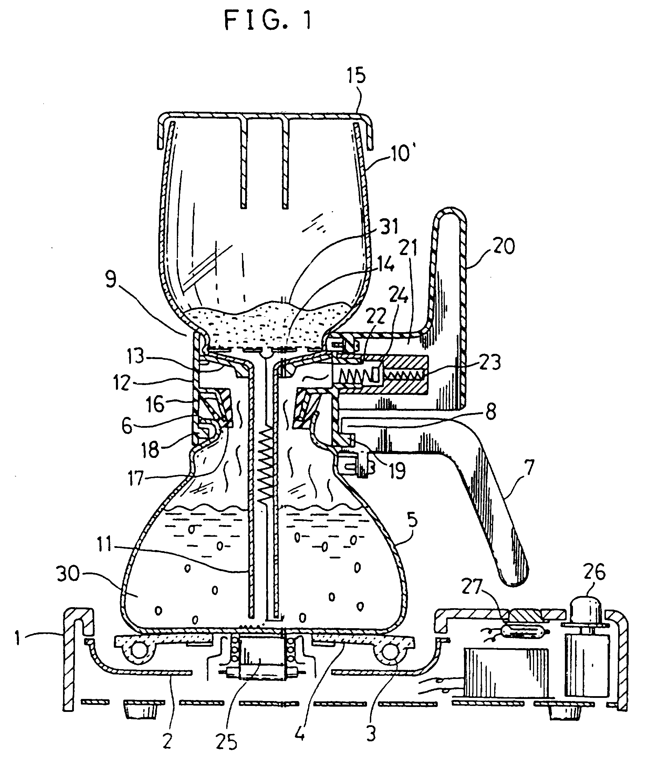

A vacuum coffee maker is shown in Figure 1, in which heating apparatus 1 is fitted with a shield 2 inside thereof, and a heating plate 4 in which a heater 3 is integrally incorporated is disposed on the shield 2. A first container or flask 5 forms a pouring opening 6 on an appropriate part of the upper opening as well as being provided at the opposite position of the pouring opening 6 with a handle 7 which is made of synthetic resin. A second engagement socket 8 among a pair of engagement sockets provided on the flask 5 is formed at the fixed end of the handle 7, while a first engagement socket is in combined use with the pouring opening 6 of the flask 5.

A second container or funnel 9 comprises a container body 10 which is made of glass and vertically provided with a pipe 11 at the lower part of the bottom thereof, and a container support (annular member) 12 which is made of synthetic resin and fixed on the outer periphery of the funnel body 10 with a gasket 13 interposed therebetween. The funnel body 10 whose inner bottom is removably fitted with a filter 14 receives coffee powder on the filter 14, and the upper opening thereof can be closed by means of a cover 15. the funnel support 12 integrally forms a cylinder 16 which is located at an adequate space on the outer periphery of a pipe 11 inside thereof, and the cylinder 16 is fitted with a gasket 17. Also, the funnel support 12 is formed at the lower end with a first engagement projection 18 which faces inwards and second projection 19 which faces outwards, thereby constituting an engagement support means with each of the engagement sockets and engagement projections.

As shown in Figure 1, by turning around the funnel in the state of press-fitting and compressing the gasket 17 against the opening of the flask 5, the funnel 9 engages an engagement projection 18 beneath the pouring opening 6 and an engagement projection 19 with the engagement socket 8, respectively, so that each engagement can be retained by means of elasticity of the gasket 17 and the juncture between the flask 5 and funnel 9 can be securely sealed.

The funnel support 12 described above has a handle 20 at a position where it faces the handle 7 on the flask 5 and provides a pressure control valve 21 at a position which is covered with the handle 20. The pressure control valve 21 comprising shape-memory alloy 22, spring 23, and valve body 24, opens to the inside of the flask 5 to expose itself to the air in the open state in the normal temperature, and then closes the same when an ambient temperature inside the flask 5 reaches a specified temperature.

In Figure 1, reference numeral 25 denotes a heat sensing device used for sensing temperatures at the bottom of the flask 5, reference numeral 26 a main switch, and reference numeral 27 a power indication lamp.

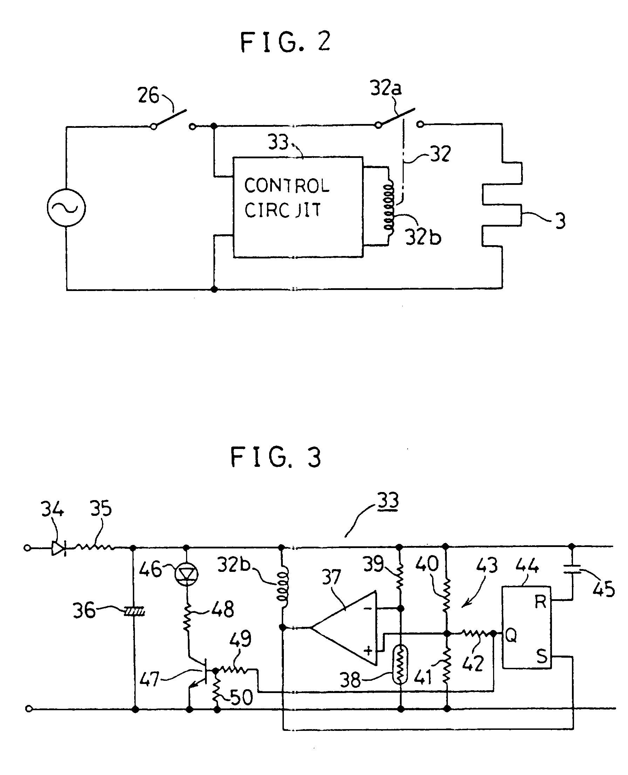

Referring now to an electric circuit of the heating apparatus 1 in Figure 2, a relay 32 forms an energizing control means and comprises a relay switch 32a and a relay coil 32b. The relay switch 32a is connected to the main switch 26 in series and serially connecting the heater 3. The relay coil 32b of the relay 32 is connected to a temperature control circuit 33 particularly shown in Figure 3.

In Figure 3, reference numeral 34 indicates a diode, reference numeral 35 shows a resistor and reference numeral 36 denotes a capacitor, whereby AC is rectified and smoothed to obtain DC. Reference numeral 37 represents a comparison circuit comprising a one-chip IC, in which the relay coil 32b is connected to its output terminal in series and to its minus input terminal, a thermister 38 as a temperature detecting means for detecting the temperature of a subject to be heated as well as a resistor 39 are connected. Thus, a voltage value divided by the thermister 38 and the resistor 39 is inputted into the minus input terminal of the comparison circuit 37. To the plus input terminal of the comparison circuit 37, a reference set point generating circuit 43 comprising resistors 40, 41 and 42 is connected. One end of the resistor 42 of the reference set point generating circuit 43 is connected to the output terminal Q in a retaining circuit 44 comprising an R S flip-flop.

In the reference set point generating circuit 43, when the output terminal Q of the retaining circuit 44 is at logical low, the resistors 41 and 42 are connected in parallel so as to apply a "low" level voltage (a high set point in temperature-wise) to the plus input terminal of the comparison circuit 37, and when the output terminal Q of the retaining circuit 44 is at logical high, the resistors 40 and 42 are connected in parallel so as to apply a "high" level voltage (A low set point in temperature-wise) to the plus input terminal of the comparison circuit 37.

Also, to the R terminal which is the reset input terminal of the retaining circuit 44, a capacitor 45 is connected, and to the S terminal which is the set input terminal, the output terminal in the comparison circuit 37 is connected. The base of a switching transistor 47 for switching on and off a light emitting diode (LED) 46 constituting a warning means is connected to the output terminal Q of the retaining circuit 44. Reference numerals 48, 49 and 50 indicate the resistors. Meanwhile, the thermister 38 is provided in the heat sensing device 25.

Operation of the heating apparatus 1 will be described in the following together with an operating method of the vacuum coffee maker.

The funnel 9 containing a coffee powder 31 is coupled with the flask 5 containing water 30, then the main switch 26 is switched on after placing the flask 5 on the heating plate 4. Thereby, through the capacitor 45, the input signal is applied to the R terminal in the retaining circuit 44 by the power build-up and the Q terminal is maintained at logical low. Thus, the resistors 41 and 42 are apparently connected in parallel and voltage at the plus input of the comparison circuit 37 at this time becomes the first set temperature level (high set point). At this time, since the resistance value of the thermister 38 is high due to a low temperature of the subject to be heated, the output of the comparison circuit 37 becomes logical low, and the relay coil 32b of the relay 32 is energized. Thereby, the relay switch 32a is switched on, and the heater 3 is energized to heat the water in the flask 5. The water temperature starts to rise, eventually generating steam.

At this time, however, the pressure control valve 21 of the flask 5 is open state so that the inside of the flask 5 communicates with the air and therefore the pressure in the flask 5 does not immediately rise. As the temperature of the hot water in the flask 5 comes close to boiling point steam is generated more extensively, and when the temperature in the flask 5 has reached a predetermined value the pressure control valve 21 is closed. With the pressure control valve 21 closed, the inside of the flask 5 becomes airtight and the inside pressure rises rapidly so as to push water into the funnel and up through the pipe 11 and the filter 14 into contact with the coffee powder 31 in the funnel 9. Thus, taste and aroma of the coffee powder 31 are effectively taken into the water.

When the boiling water volume in the flask 5 decreases and as the water temperature rises, the resistance of thermister 38 becomes smaller and the minus input of the comparison circuit 37 drops below the plus input, the output of comparison circuit 37 becoming logical high and the relay 32 stops energising the heater 3.

At this time, by inputting the output of the comparison circuit 37 to the S input of the retaining circuit 44, the output Q of the retaining circuit becomes logical high and continues to retain this state. Thus, the resistors 40 and 42 are connected in parallel and the plus input of the comparison circuit 37 becomes higher than before (lower than the first set level in temperature-wise).

Also, since the output terminal Q of the retaining circuit 44 is kept retaining the logical high regardless of the subsequent input of logical low or logical high to the S input, the relay 32 is switched on and off at the second set level (low temperature set point) thereafter to effect warming.

Moreover, in Figure 3, when the output of the output terminal Q of the retaining circuit 44 is at logical low, the LED 46 is turned off and at logical high, it is turned on. Thus, the warming mode is indicated by the LED 46 which turns on when entering said mode.

When the temperature in the flask 5 starts to drop and the internal pressure of the flask 5 reduces as time lapses after stopping heating by the heater 3, the internal pressure of the flask 5 becomes negative and the coffee solution in the funnel 9 is returned to the flask 5 through the filter 14 and pipe 11.

After the extraction of coffee essence, by holding the handles 7, 20 and rotating the flask 5 and the funnel 9 reciprocally to disengage the engagement projections 18, 19 and the pouring opening 6 and the engagement socket 8, the funnel 9 can be pulled off from the flask 5, enabling the coffee solution therein to be poured. Meanwhile, the coffee remained in the flask 5 may be kept at, for example, 80 to 85°C if the flask 5 is placed on the heating plate 4, since, as previously described, the heater 3 is energized at the second set level.

In the foregoing embodiment, though the vacuum coffee maker has been described, it is to be understood that it can be used similarly for other purposes. The invention is particularly suitable for heating liquids, but might also be used to heat and maintain solids at an elevated temperature, with suitable identification of reference set points.

Apparatus of the present invention as above described is constructed in such a manner that one comparison circuit enables the setting of both the high temperature heating mode and the low temperature heating mode. The structure of temperature control circuit may thus be considerably simplified resulting in a low manufacturing cost. Reliability is enhanced by minimising the use of mechanically operating parts. Moreover, since the replacement of either or both of the one-chip IC of the comparison circuit and R S flip-flop can be accomplished without difficulty, in the case of failure repair is extremely easy.

## Claims

1. Heating apparatus having a heating element (3) for heating a subject to be heated, means (25) for detecting the temperature of the subject and for generating an output signal corresponding to the detected temperature and means (33) for controlling the operation of the heating element, wherein the controlling means (33) comprises set point generating means (43, 44) for selecting between a plurality of preset reference set points and for outputting a reference set point signal corresponding thereto, comparison means (37) having a first input (-) connected to receive the detected temperature signal, a second input (+) connected to receive the selected reference set point signal and an output connected to energising control means (32) for controlling the supply of power to the heating element in accordance with the result of the comparison between the input signals, characterised in that
the comparison means output is connected also to an input (S) cf the reference set point generating means (43, 44) and the latter includes retaining means (44) adapted to retain a first state and select a first reference set point of the reference set point generating means on commencement of heating, said retaining means being responsive to the output from the comparison means (37) such that when the first set point temperature is reached, the retaining means takes and retains a second state and selects a second reference set point of the reference set point generating means.

2. Apparatus as claimed in Claim 1, CHARACTERISED IN THAT the retaining means (44) is an R S flip-flop circuit which changes over the reference set point by way of resistors (41,42) connected to its output terminal.

3. Apparatus according to Claim 1 or Claim 2, CHARACTERISED IN THAT wherein the temperature detecting means is a thermister (38).

4. Apparatus according to any preceding Claim, CHARACTERISED IN THAT means (47) is included for warning the changeover of reference set point by an output signal from the retaining means (44).

5. Apparatus according to Claim 4, CHARACTERISED IN THAT the warning means comprises a light emitting diode (46) and a driving circuit therefor.

## Patentansprüche

1. Heizvorrichtung mit einem Heizelement (3) zur Heizung eines zu heizenden Gegenstandes, einer Einrichtung (25) zur Erfassung der Temperatur des Gegenstandes und zur Erzeugung eines der erfaßten Temperatur entsprechenden Ausgangssignals und einer Einrichtung (33) zur Kontrolle bzw. Steuerung des Betriebes des Heizelements, wobei die Kontroll- bzw. Steuereinrichtung eine Einrichtung (43, 44) zur Erzeugung eines Sollwertes aufweist für die Selektion zwischen mehreren voreingestellten Bezugssollwerten und zur Abgabe eines entsprechenden Bezugssollwertsignales, einer Vergleichseinrichtung (37), welche einen ersten Eingangsanschluß (-) zum Empfang des erfaßten Temperatursignales, einen zweiten Eingangsanschluß (+) zum Empfang des selektierten Bezugssollwertsignales sowie einen Ausgangsanschluß zum Erregen der Kontroll- bzw. Steuereinrichtung (32) besitzt für die Steuerung der Energiezuführung zu dem Heizelement entsprechend dem Ergebnis des Vergleichs zwischen den Eingangssignalen,
**dadurch gekennzeichnet,** daß
der Ausgang der Vergleichseinrichtung ferner an einen Eingang (S) der Einrichtung (43, 44) zur Erzeugung eines Bezugssollwertes angeschlossen ist und diese letztere eine Halteeinrichtung (44) enthält, welche zum Beibehalten eines ersten Zustandes und zum Selektieren eines ersten Bezugssollwertes der Einrichtung zur Erzeugung eines Bezugssollwertes bei Beginn des Aufheizens geeignet ist, wobei die Halteeinrichtung auf das von der Vergleichseinrichtung (37) ausgehende Ausgangssignal derart anspricht, daß, wenn die erste Sollwerttemperatur erreicht ist, die Halteeinrichtung einen zweiten Zustand einnimmt und beibeibehält und einen zweiten Bezugssollwert der Bezugssollwerterzeugungseinrichtung selektiert.

2. Vorrichtung nach Anspruch 1,
**dadurch gekennzeichnet,** daß
die Halteeinrichtung (44) eine R-S Flip-Flop Schaltung ist, welche den Bezugssollwert durch an ihrem Ausgangsanschluß angeschlossene Widerstände (41, 42) umschaltet.

3. Vorrichtung nach 1 oder 2,
**dadurch gekennzeichnet,** daß
die Temperaturerfassungseinrichtung ein Thermistor (38) ist.

4. Vorrichtung nach einem der vorangegangenen Ansprüche,
**dadurch gekennzeichnet,** daß
eine Einrichtung (47) vorgesehen ist zur Warnung bzw. Anzeige der Umschaltung des Bezugssollwertes durch ein von der Halteeinrichtung (44) augehendes Ausgangssignal.

5. Vorrichtung nach Anspruch 4,
**dadurch gekennzeichnet,** daß
die Warneinrichtung dazu eine lichtemittierende Diode (46) und eine Treiberschaltung umfaßt.

6. Vorrichtung nach einem der vorangegangenen Ansprüche,
**gekennzeichnet durch**
eine Einrichtung (4) zur Lagerung eines Flüssigkeitsbehälters auf dem Heizelement (3).

7. Unterdruckkaffeemaschine,
**gekennzeichnet durch**
eine Vorrichtung nach Anspruch 6.

## Revendications

1. Appareil de chauffage comportant un élément chauffant (3) pour le chauffage d'un objet à chauffer ; un moyen (25) de mesure de la température de l'objet et de production d'un signal de sortie correspondant à la température mesurée, et un moyen (33) de commande de fonctionnement de l'élément chauffant, dans lequel le moyen de commande (33) comprend des moyens de production de points de réglage (43, 44) pour choisir entre une pluralité de points de réglage de référence présélectionnés et pour sortir un signal de point de réglage de référence y correspondant, un moyen de comparaison (37) ayant une première entrée (-) connectée pour recevoir le signal de température mesurée, une seconde entrée (+) connectée pour recevoir le signal de point de réglage de référence sélectionné et une sortie connectée au moyen de commande d'alimentation (32) pour commander l'alimentation en puissance de l'élément chauffant selon le résultat de la comparaison entre les signaux d'entrée, caractérisé en ce que
la sortie du moyen de comparaison est également connectée à une entrée (S) des moyens de production de points de réglage de référence (43, 44) et en ce que ces derniers comprennent un moyen de conservation (44) conçu pour conserver un premier état et pour sélectionner un premier point de réglage de référence des moyens de production de points de réglage de référence au début du chauffage, ledit moyen de conservation réagissant à la sortie provenant du moyen de comparaison (37) de telle sorte que lorsque le premier point de réglage de température est atteint, le moyen de conservation prend et conserve un second état et sélectionne un second point de réglage de référence des moyens de production de points de réglage de référence.

2. Appareil selon la revendication 1, caractérisé en ce que le moyen de conservation (44) est un circuit à bascule R S qui réalise le passage d'un point à un autre, du point de réglage de référence, au moyen de résistances (41, 42) reliées à sa borne de sortie.

3. Appareil selon la revendication 1 ou la revendication 2, caractérisé en-ce que le moyen de mesure de température est une thermistance (38).

4. Appareil selon l'une quelconque des revendications précédentes, caractérisé en ce qu'un moyen (47) est incorporé pour avertir du passage d'un point à un autre du point de réglage de référence par un signal de sortie issu du moyen de conservation (44).

5. Appareil selon la revendication 4, caractérisé en ce que le moyen pour avertir comprend une diode émettrice de lumière (46) et un circuit de commande pour celle-ci.

6. Appareil selon l'une quelconque des revendications précédentes, caractérisé par un moyen (4) pour soutenir un récipient de liquide sur l'élément chauffant (3).

7. Cafetière à dépression caractérisée par un appareil selon la revendication 6.
